# EUROPEAN PATENT SPECIFICATION

(11) **EP 3 764 847 B1**
(45) Date of publication and mention of the grant of the patent: **30.04.2025**
(21) Application number: 19766726.4
(22) Date of filing: 02.03.2019
(51) Int. Cl.: B31F 7/00, B42D 15/00, A47G 21/18, B65B 61/20, B65D 77/28, B31D 5/00

(54) **A DRINKING STRAW AND A METHOD FOR MANUFACTURING IT**
TRINKHALM UND VERFAHREN ZU SEINER HERSTELLUNG
PAILLE ET SON PROCÉDÉ DE FABRICATION

(30) Priority: 12.03.2018 FI 20185225; 27.09.2018 FI 20185809
(43) Date of publication of application: 20.01.2021
(73) Proprietor: Dolea Oy, 00100 Helsinki (FI)
(72) Inventor: SALOMÄKI, Mika, 05840 Hyvinkää (FI); ELONEN, Eija, 20159 Milano (IT)
(74) Representative: Salomäki, Juha Kari Ensio
(86) International application number: PCT/FI2019/050170
(87) International publication number: WO 2019/175470

(56) References cited:
- WO-A1-2010/052371
- CN-A- 102 119 826
- DE-U1- 202018 105 665
- US-A- 1 466 185
- US-A- 5 495 982
- US-A- 5 506 046

## Description

The object of the present invention is a drinking straw as defined in the preamble of claim 1 and a method as defined in the preamble of claim 6 for manufacturing the drinking straw.

The drinking straw according to the invention and also the method for making it, which are hereinafter referred to as the solution according to the invention, is an environmentally-friendly, sustainable solution for a drinking straw, to be easily manufactured from renewable and fully compostable, recyclable and repulpable materials for the food service industry.

Nowadays with disposable drinking straws for beverages, when served for cold drinks, like juice drink, milk, cold coffee or tea drink, milkshake or smoothie or alcohol containing drinks are very often used with a plastic straw. After use, this disposabe straw can easily be thrown into the nature as very small and light article, without being collected in the garbage bin, as disposable cups are used as on-the-go. Currently the European Commission proposes rules to the single-use plastic products most often as litter on Europe's beaches and seas, where plastic straw is one. According to these new rules, plastic straws will be banned in the whole EU region. Simultaneously several global companies have pledged to get rid of plastics straws from their offering to the market. Straws are also made of so-called bio-plastic. Bio-plastic is made of non-fossil renewable plant-based material. It is still plastic, because it contains polymers and it is not easy to recycle and it will not degrade to the nature. These PLA products will stay in nature and marine environment for many years.

Plastic, when littered, is a loss not only in the economic value of the material, simultaneously it causes the costs of tidying up beaches, parks or other parts of nature and causes negative impact for tourism, fisheries and shipping. When in nature, plastics grade extremely slowly. They accumulate in rivers, seas and beaches and plastic residues effect marine flora and fauna, plants as well as birds, sea turtles, seals, fish, whales and other sea animals and effect to our food chain at the end.

Another problem is that plastic and bioplastic recyclabil-ity is challenging, especially how to get collected to the right material stream. Often consumer throw a used cup & straw into the same bin, even they are not same material.

If used with a paper cup, a plastic or bio-plastic straw cannot be recycled in same method as a plastic straw. a plastic or bio-plastic straw alone should be recycled in the plastic stream, which is the least effective in recycling and a straw represents a very small quantity in mass in the whole waste.

According to the research of the plastic litter cleaned from the sea shore, from all the plastics waste, plastic straws and plastics cups were in the top 10 mostly found plastic waste.

Another type of disposable drinking straw is a paper straw. Paper straws have become a strong alternative to plastic straws, since they are more eco-friendly option. Some manufacturers are offering degradable paper straws. However, the problem with paper straws is slow and more expensive manufacturing process when spinning the paper to the shape of the drinking straw. Paper straw also comprises adhesive (glue) layer between the paper layer. This adhesive layer contains also polymers and thus paper straw is not a plastic free product.

Another new type of drinking straw is a composite straw. Small wood articles have been mixed to resin forming the straw and it is manufactured with extrusion method like manufacturing of plastic straws. Resin in the composite straw is made basically plastic (PLA) comprising polymers.

Yet another disadvantage of all today's drinking straw is a very limited and not optimal shape printing area on side of the straw. The drinking straw would be a perfect place for commercial advertisements, product information, logos, funny pictures to children, etc. Plastic -, bio-plastic - and composite straws are made of extrusion techniques and free printing is not possible. Some limited printing can be done to paper straws, but because of the winding technology, the printings are mainly colored strips or recurring figure - wide printable surface is missing.

The purpose of the present invention is to eliminate the aforementioned drawbacks and to provide an inexpensive, simple and environmentally-friendly solution for disposable drinking straws from renewable recyclable fiber material or other effectively recyclable material or biodegradable material.

The object of the present invention is to eliminate drawbacks of prior art technology and to introduce new type of drinking straw, and a method to manufacturing it. The base material of drinking straw is coated cardboard. The cardboard may also be coated on the other side with thin coating, which enable cardboard fastening to each other by sealing. The material of the drinking straw according the invention is biodegradable, recyclable and may be repulpable.

The drinking straw according to the invention comprises a liquid channel and one edge section, which liquid channel is essentially parallel with the edge section. The drinking straw material is sustainable, recyclable and biodegradable coated cardboard, and in that the drinking straw is formed of one essentially rectangular sheet-like piece of the coated cardboard.

A drinking straw according to the preamble of claim 1 and a method for manufacturing a drinking straw according to the preamble of claim 6 is known from the document CN 102119826 A.

The drinking straw according to the invention is characterized by what is disclosed in the characterization part of claim 1 and the method for manufacturing the drinking straw is characterized by what is disclosed in the characterization part of claim 6.

Other embodiments of the invention are characterized by what is disclosed in the dependent claims.

An advantage of the invention is that it is a better designed drinking straw product for recycling, which allows when collected with paper cups a unified material stream for the recycling schemes. The drinking straw material can also be repulpable fibre-based material. The drinking straw according to the invention is environment-friendly sustainable drinking straw. Because the drinking straw is formed by heat-sealing, it comprises no additional components, like adhesives / glues, thus it is made of plain coated cardboard. Since the straw does not contain additional components it is also safe to use.

Another advantage of the invention is simple and fast manufacturing methods of drinking straws comparing for example to the methods in manufacturing paper straws. The cost of manufactured drinking straws according to invention is very low, cheaper than with the traditional paper straws.

Yet another advantage and use of the invention is, that the drinking straw outlook can be personalized with printings. The coated cardboard material is feasible for free printing and the surface area of the drinking straw is large and especially in drop-shape straws it is two sided, which may contain various multicolor printings. Printings may be, for example: advertising, logos, text, product information, seasonal themes, etc. Also, wide surface of the drinking straw enables the use of several add-on functions in the drinking straw, like: color changing thermometer, appearing figures, different sensors (e.g. toxic sensor, alcohol sensor, etc.), measuring line for liquids, etc. The printing inks is selected to be food certified inks.

In the following, the invention will be described in greater detail by the aid of some embodiments and by referring to the attached simplified drawings, wherein
- Fig. 1: presents a shapeable sheet-like rectangular piece, from which the drinking straw is formed of, as viewed obliquely from above and from the side,
- Fig. 2: presents a shapeable rectangular sheet-like piece in FIG. 1 bended to form of a round drinking straw, as viewed obliquely from above and from the side,
- Fig. 3: presents a top view of the cross-sectioned drinking straw in FIG. 2,
- Fig. 4: presents a rectangular shapeable sheet-like piece in FIG. 1 bended to form a flat, or drop-shape drinking straw, as viewed obliquely from above and from the side,
- Fig. 5: presents an embodiment of a drinking straw with one edge section and the drinking straw is formed from one sheet-like piece, as viewed obliquely from above and from the side,
- Fig. 5a: presents a top view of the cross-sectioned drinking straw in FIG. 5,
- Fig. 6: presents the drinking straw in FIG. 5 with printings on its surface, as viewed obliquely from above and from the side,
- Fig. 6a: presents the drinking straw in FIG. 2 with printings on its surface, as viewed obliquely from above and from the side,
- Fig. 7: presents the side view of a manufacturing process of the drinking straw in FIG. 2 and in FIG. 5,
- Fig. 8a: presents the top view of a manufacturing process of the drinking straw in FIG. 5, and
- Fig. 8b: presents the top view of a manufacturing process of the drinking straw in FIG. 2.

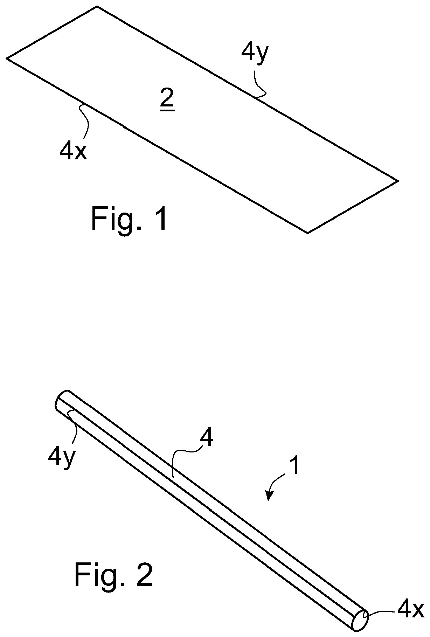

Figure 1 presents an essentially rectangular shapeable sheet-like piece 2, from which the drinking straw 1 is formed, as viewed obliquely from above and from the side. This sheet-like piece 2 is cut preferably from a coated cardboard web in the fabrication phase described later. The sheet-like piece 2 comprises opposite edges 4x and 4y.

The coated cardboard used in this drinking straw embodiment is sustainable environment-friendly cardboard utilized also e.g. in paper cups. This coated cardboard coating is made online with cardboard manufacturing process using dispersion techniques. The coating layer is very thin comprising much less plastic than e.g. conventional PE-/ PLA coated card boards. This material is easy to recycle with other paper-products and the material is repulpable. This coated cardboard id also biodegradable and degrade in marine environment easily. This coated cardboard is also heat-sealable providing the drinking straw manufacturing without additional components, like adhesives or glues.

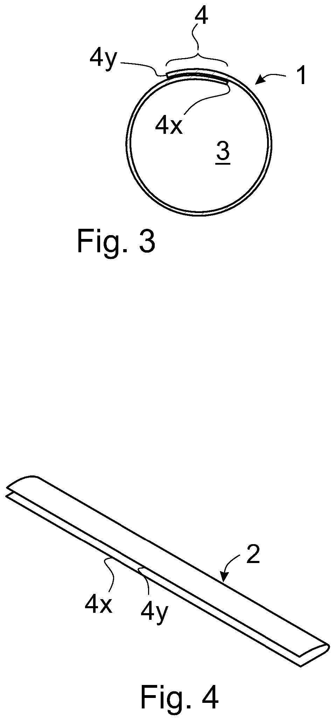

In Figure 2 is presented the shapeable sheet-like piece 2 in FIG. 1 bended to form of a round drinking straw 1, as viewed obliquely from above and from the side. The sheet-like piece 2 is bended so, the opposite edges 4x and 4y are overlapped and meets each other and are joined together. In Figure 3 is presented a top view of the cross-sectioned the round drinking straw in FIG. 2.

The round drinking straw 1 is formed of one essentially rectangular sheet-like piece 2 and it comprises one edge section 4 and a liquid channel 3. The edge section 4 is alongside or adjacent and essentially parallel with the liquid channel 3. The edge section 4 is also essentially straight. The sheet-like piece 2 is bended so, the opposite edges 4x and 4y are overlapped. In the overlapped cardboard sections, the opposite sides of the sheet-like piece 2 surfaces are facing each other's. The overlapped cardboard sections are fastened tightly together forming the edge section 4. When the edge section 4 is formed, also the liquid channel 3 is formed alongside and essentially parallel to the edge section 4. Comparing to prior art drinking straw technologies, extrusion-based straws (plastic, bio-plastic and composite) don't have edge section at all and the edge section in the paper straw is not parallel or straight with the liquid channel, since the edge section traverse spirally in the straw.

In Figure 4 is presented the essentially rectangular shapeable sheet-like piece in FIG. 1 bended to form a flat, or drop-shape drinking straw, as viewed obliquely from above and from the side,

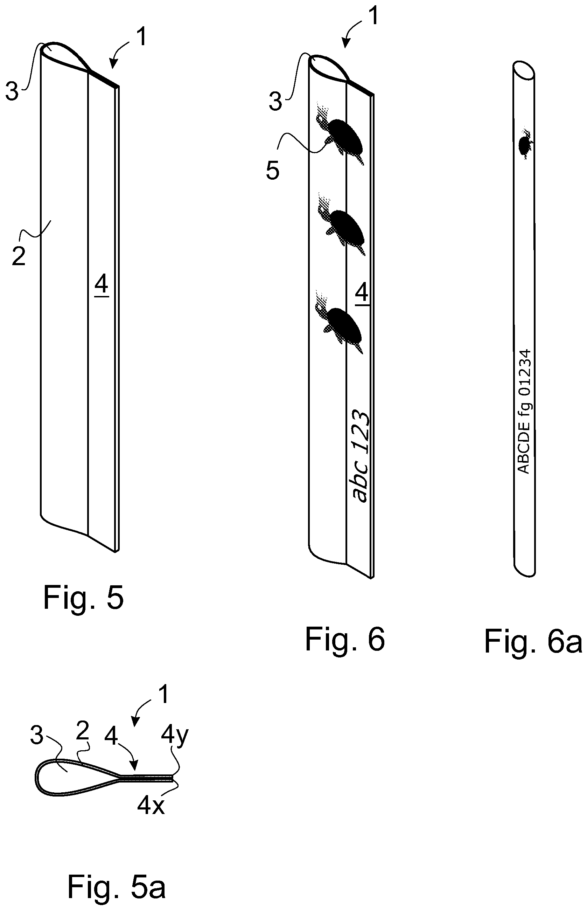

In Figure 5 is presented an embodiment of a drinking straw 1 with one edge section 4 and the drinking straw 1 is formed from one rectangular sheet-like piece 2, as viewed obliquely from above and from the side. In Figure 5a is presented a top view of the cross-sectioned drinking straw 1 in FIG. 5.

The drinking straw 1 is formed of one essentially rectangular sheet-like piece 2 and it comprises one edge section 4 and a liquid channel 3. The sectioned drinking straw 1 is drop shaped. The edge section 4 is alongside or adjacent and essentially parallel with the liquid channel 3. The edge section 4 is also essentially straight. The sheet-like piece 2 is bended so, the opposite edges 4x and 4y are overlapped and meets each other. The overlapped cardboard sections are fastened tightly to each other forming the edge section 4. In the overlapped cardboard sections, the same side of the sheet-like piece 2 surfaces are facing each other's. It is also possible to flip the other edge so, that opposite side surfaces are facing each other's. When the edge section 4 is formed, also the liquid channel 3 is formed alongside and essentially parallel to the edge section 4.

In Figure 6 is presented the drinking straw 1 in FIG. 5 with printings 5 on its surface, as viewed obliquely from above and from the side and in Figure 6a is presented the drinking straw in FIG. 2 with printings on its surface, as viewed obliquely from above and from the side,

The drinking straw 1 according to this innovation has a coated cardboard surface, which provides good surface for printings 5. In relatively large printing surface, it is possible to design various printing themes. The drop shaped drinking straw 1 has two printable sides. With printings 5, the drinking straws 1 can be personalized. The printing 5 may contain various multicolor printings. Printings 5 may be, for example: advertising, logos, text, product information, seasonal themes, etc.

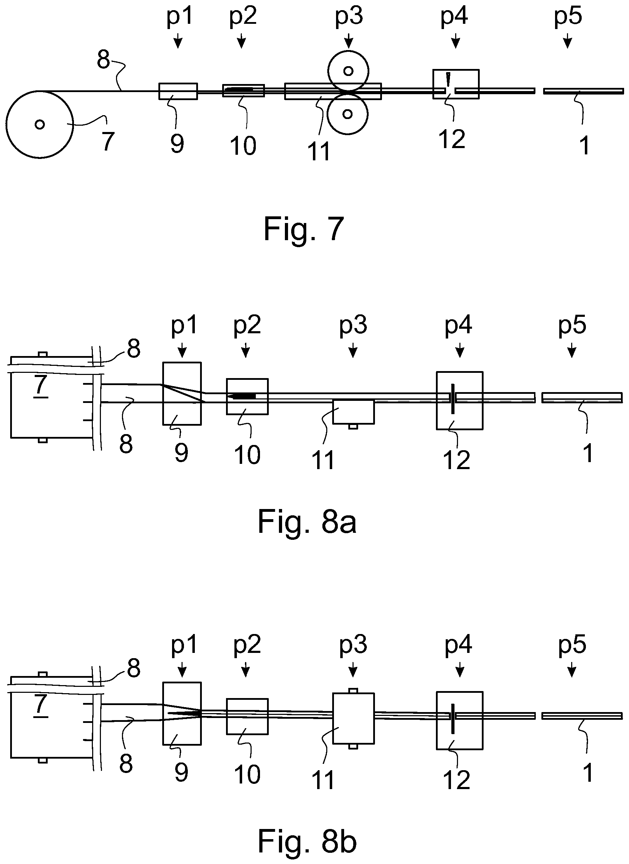

In Figure 7 is presented a side view of a manufacturing process of the drinking straw 1 of FIG. 2 and in FIG. 5 with a production machine. In Figure 8a is presented a top view of a manufacturing process of the drop-shaped drinking straw of FIG. 5 with a production machine. In Figure 8a is presented a top view of a manufacturing process of the round drinking straw of FIG. 1 with a production machine. The drinking straw 1 coated cardboard material, which is e.g. preprinted, is rolled out from the material roll 7. The out-rolled material forms a continuous web 8. In a phase p1, the web 8 is bent with a bending means 9 in a shape of the drinking straw. In a phase p2, the liquid channel is formed with a mold means 10. In phase a p3, the overlapped edges 4x and 4y of the web 8 are fastened to each other with a fastening means 11 forming the edge section 4 of the drinking straw 1. When the edge section 4 is formed, also the liquid channel 3 is formed alongside or adjacent and essentially parallel to the edge section 4. In phase a p4 the web is cut to the desired length of the drinking straws 1. In a phase p5, the drinking straw 1 is manufactured.

It is obvious, the original material rolls 7 presented above and in pictures are wider than a single web 8. The material roll 7 is cut to several parallel webs 8 to parallelly produce the drinking straws 1. It is also possible to cut the material roll 7 in desired width of the web 8 in advance, e.g. with preprinting process.

The material of the drinking straws 1 presented above used in drinking straws is coated cardboard which is sustainable, biodegradable, easily recyclable and repulpable material.

When at least other side of the sheet-like piece 2 is coated and the sheet-like piece 2 is bended or folded with thin plastic coating layers facing each other, the fastening of the edge section 4 of the drinking straws 1 can be made by heat or cold sealing. When there is no sealable coating on the material, the fastening of the edge section 4 of the drinking straws 1 can made by food-contact approved adhesives. The heat sealing fastening method provides drinking straws 1 without additional components, like adhesives or glues.

To avoid the waterlogging of the drinking straw 1 material, the raw edges of the material (cut edges) may be treaded with hydrophobic coating or corresponding. The waterlogging is reduced by cutting the material edges in skew angle and pressing the material flat in the manufacturing phase.

In the embodiments presented above, it is advantageous to form the round or the flat/drop shaped drinking straw 1, which feels good in a user's mouth. The drinking straw 1 dimensions depend on the beverage viscosity and on the user target group - babies, children, adults. For juices and children beverages, advantageously the straw 1 has smaller dimensions. For example, the straw thickness is less than 5.0 mm and the straw width is between 12 mm and 22 mm. For adult beverages and higher viscosity beverages, advantageously the drinking straw 1 thickness, is less than 9.0 mm and the width is between 15 mm and 25 mm.

It is obvious to the person skilled in the art that different embodiments of the invention are not limited to the example described above, but that they may be varied within the scope of the claims presented below. Thus, for example, the shapes and dimensions of the drinking straw can be different to what is described in the embodiments. The sectioned shape of the drinking straw may be for example round, ellipse or drop shape.

## Claims

1. A drinking straw, made of biodegradable material, which drinking straw (1) comprises a liquid channel (3) and one edge section (4), which liquid channel (3) is essentially parallel with the edge section (4), whereby the drinking straw (1) material is sustainable and recyclable heat sealable coated cardboard, and the drinking straw (1) is formed of one essentially rectangular sheet-like piece (2) of the coated cardboard, **characterized in that** the drinking straw (1) comprises a heat sealed fastening which fastens together two thin overlapping material layers of the edge section by sealing thin sealable coatings of the coated cardboard together and which material edge is cut in skew angle and pressed flat in manufacturing phase to avoid waterlogging of the drinking straw material.

2. A drinking straw according to any of the preceding claims, **characterized in that** a sectioned shape of the drinking straw (1) is round or ellipse or drop-shape.

3. A drinking straw according to any of the preceding claims, **characterized in that** the drinking straw (1) comprises a printable surface for printings (5).

4. A drinking straw according to any of the preceding claims, **characterized in that** the drinking straw (1) comprises large and uniform, whole drinking straw (1) covering printable surface for printings (5).

5. A drinking straw according to any of the preceding claims, **characterized in that** whole surface of the sheet-like piece (2) forming outer surface of the drinking straw (1) is pre-printable before drinking straw (1) forming process.

6. Method for manufacturing a drinking straw made of biodegradable material, which drinking straw (1) comprises a liquid channel (3) and one edge section (4), which liquid channel (3) is alongside and essentially parallel with the edge section (4), wherebythe drinking straw (1) is fabricated from one essentially rectangular sheet-like sustainable and recyclable piece of heat sealable coated cardboard (2) with a production machine, **characterized in that** the drinking straw (1) is formed by heat sealing fastening together two thin overlapping material layers of the edge section by sealing thin sealable coatings of the coated cardboard together and which material edge is cut in skew angle and pressed flat in manufacturing phase to avoid waterlogging of the drinking straw material.

7. Method according to claim 6, **characterized in that** the drinking straw (1) is fabricated from one shapeable sheet-like piece (2), which is bended without sharp fold so, that the two opposite edges (4x, 4y) of the sheet-like piece (2) are overlapped and overlapped sections are fastened to each other forming one drinking straw (1) edge section (4) and the liquid channel (3) is formed alongside and essentially parallel with the edge section (4).

8. Method according to claims 6 or 7, **characterized in that** in the material for the drinking straws (1) is rolled out from one or more material rolls (7), preferably as preprinted with printings (5).

9. Method according to claims 6, 7 or 8, **characterized in that** in the fabricating process the material for the drinking straws (1) is rolled out as a web (8) from the material roll (7), which web (8) is formed and fastened to a shape of the drinking straw (1) and the formed web (8) is cut to a desired length of the drinking straws (1).

10. Method according to any of the preceding claims 6-9, **characterized in that** the production machine comprises several parallel webs (8), which are rolled out from several parallel material rolls (7) to produce parallelly the drinking straws (1).

11. Method according to any of the preceding claims 6-10, **characterized in that** the drinking straw (1) raw cut edges are treated with hydrophobic coating.

## Patentansprüche

1. Ein Trinkhalm, hergestellt aus biologisch abbaubarem Material, welcher Trinkhalm (1) einen Flüssigkeitskanal (3) und einen Kantenbereich (4) besitzt, welcher Flüssigkeitskanal (3) im Wesentlichen parallel zum Kantenbereich (4) verläuft, wobei es sich beim Material des Trinkhalms (1) um nachhaltige und recycelbare, heißsiegelfähige, beschichtete Pappe handelt, und der Trinkhalm (1) aus einem im Wesentlichen rechteckigen blattförmigen Stück (2) der beschichteten Pappe geformt wird, **dadurch gekennzeichnet, dass** der Trinkhalm (1) eine heißgesiegelte Verbindung besitzt, die zwei dünne, überlappende Materiallagen des Kantenbereichs verbindet, indem sie die dünne, siegelfähige Beschichtung der beschichteten Pappe versiegelt, und welche Materialkante in der Herstellungsphase im schiefen Winkel geschnitten und flach gedrückt wird, um Staunässe im Material des Trinkhalms zu vermeiden.

2. Ein Trinkhalm nach einem der vorhergehenden Ansprüche, **dadurch gekennzeichnet, dass** ein Querschnitt des Trinkhalms (1) rund oder ellipsen- oder tropfenförmig ist.

3. Ein Trinkhalm nach einem der vorhergehenden Ansprüche, **dadurch gekennzeichnet, dass** der Trinkhalm (1) eine bedruckbare Oberfläche für Aufdrucke (5) besitzt.

4. Ein Trinkhalm nach einem der vorhergehenden Ansprüche, **dadurch gekennzeichnet, dass** der Trinkhalm (1) eine große und einheitliche, den gesamten Trinkhalm (1) bedeckende Oberfläche für Aufdrucke (5) besitzt.

5. Ein Trinkhalm nach einem der vorhergehenden Ansprüche, **dadurch gekennzeichnet, dass** die gesamte Oberfläche des blattförmigen Stücks (2), welche die äußere Oberfläche des Trinkhalms (1) bildet, vor dem Prozess zur Formung des Trinkhalms (1) bedruckbar ist.

6. Verfahren zur Herstellung eines Trinkhalms aus biologisch abbaubarem Material hergestellt, welcher Trinkhalm (1) einen Flüssigkeitskanal (3) und einen Kantenbereich (4) besitzt, welcher Flüssigkeitskanal (3) neben und im Wesentlichen parallel zum Kantenbereich (4) verläuft, wobei der Trinkhalm (1) mit einer Produktionsmaschine aus einem im Wesentlichen rechteckigen blattförmigen, nachhaltigen und recycelbaren Stück heißsiegelfähiger, beschichteter Pappe (2) geformt wird, **dadurch gekennzeichnet, dass** der Trinkhalm (1) durch eine heißgesiegelte Verbindung geformt wird, die zwei dünne, überlappende Materiallagen des Kantenbereichs verbindet, indem sie die dünne, siegelfähige Beschichtung der beschichteten Pappe versiegelt, und welche Materialkante in der Herstellungsphase im schiefen Winkel geschnitten und flach gedrückt wird, um Staunässe im Material des Trinkhalms zu vermeiden.

7. Verfahren nach Anspruch 6, **dadurch gekennzeichnet, dass** der Trinkhalm (1) aus einem formbaren, blattförmigen Stück (2) hergestellt wird, das ohne scharfen Falz gebogen wird, sodass die beiden gegenüberliegenden Kanten (4x, 4y) des blattförmigen Stücks (2) einander überlappen, und die einander überlappenden Bereiche miteinander verbunden sind und so einen Kantenbereich (4) des Trinkhalms (1) bilden, und der Flüssigkeitskanal (3) daneben geformt wird und im Wesentlichen parallel zum Kantenbereich (4) verläuft.

8. Verfahren nach Anspruch 6 oder 7, **dadurch gekennzeichnet, dass** das Material für die Trinkhalme (1), vorzugsweise zuvor mit Aufdrucken (5) bedruckt, von einer oder mehreren Materialrollen (7) abgerollt wird.

9. Verfahren nach Anspruch 6, 7 oder 8, **dadurch gekennzeichnet, dass** das Material für die Trinkhalme (1) im Herstellungsverfahren als Netz (8) von der Materialrolle (7) abgerollt wird, welches Netz (8) so geformt und verbunden wird, dass es die Form des Trinkhalms (1) annimmt, und das geformte Netz (8) auf eine gewünschte Länge des Trinkhalms (1) zugeschnitten wird.

10. Verfahren nach einem der vorhergehenden Ansprüche 6-9, **dadurch gekennzeichnet, dass** die Produktionsmaschine mehrere parallele Netze (8) enthält, die von mehreren parallelen Materialrollen (7) abgerollt werden, um die Trinkhalme (1) parallel herzustellen.

11. Verfahren nach einem der vorhergehenden Ansprüche 6-10, **dadurch gekennzeichnet, dass** die unverarbeiteten Schnittkanten des Trinkhalms (1) mit einer wasserabweisenden Schicht beschichtet sind.

## Revendications

1. Une paille à boire, faite d'un matériau biodégradable, laquelle paille à boire (1) comprend un canal de liquide (3) et une section de bord (4), lequel canal de liquide (3) est essentiellement parallèle à la section de bord (4), le matériau de la paille à boire (1) étant un carton enduit thermosoudable durable et recyclable, et la paille à boire (1) étant formée d'une pièce en forme de feuille (2) essentiellement rectangulaire du carton enduit, **caractérisée en ce que** la paille à boire (1) comprend une fixation thermoscellée qui fixe ensemble deux fines couches de matériau se chevauchant de la section du bord en scellant ensemble une fine couche scellable du carton enduit et dont le bord du matériau est coupé en biais et pressé à plat dans la phase de fabrication pour éviter l'engorgement du matériau de la paille à boire.

2. Paille à boire selon l'une des revendications précédentes, **caractérisée en ce qu'**une forme de section de la paille à boire (1) est ronde ou en forme d'ellipse ou de goutte.

3. Paille à boire selon l'une des revendications précédentes, **caractérisée en ce que** la paille à boire (1) comprend une surface imprimable pour les impressions (5).

4. Paille à boire selon l'une des revendications précédentes, **caractérisée en ce que** la paille à boire (1) comprend une paille à boire entière (1), large et uniforme, couvrant la surface imprimable pour les impressions (5).

5. Paille à boire selon l'une des revendications précédentes, **caractérisée en ce que** toute la surface de la pièce en forme de feuille (2) formant la surface extérieure de la paille à boire (1) est pré-imprimable avant le processus de formation de la paille à boire (1).

6. Méthode de fabrication d'une paille à boire en matériau biodégradable, laquelle paille à boire (1) comprend un canal à liquide (3) et une section de bord (4), lequel canal à liquide (3) est le long et essentiellement parallèle à la section de bord (4), la paille à boire (1) étant fabriquée à l'aide d'une machine de production à partir d'un morceau de carton enduit thermosoudable (2) durable et recyclable, essentiellement rectangulaire, en forme de feuille, **caractérisée par le fait que** la paille (1) est formée par la fixation par thermoscellage de deux fines couches de matériau se chevauchant dans la section du bord en scellant ensemble de fines couches scellables du carton enduit et que le bord du matériau est coupé en biais et pressé à plat dans la phase de fabrication pour éviter que le matériau de la paille ne s'imbibe d'eau.

7. Méthode selon la revendication 6, **caractérisée en ce que** la paille à boire (1) est fabriquée à partir d'une pièce façonnable en forme de feuille (2), qui est pliée sans pliure nette de sorte que les deux bords opposés (4x, 4y) de la pièce en forme de feuille (2) se chevauchent et les sections chevauchées sont fixées l'une à l'autre pour former une section de bord (4) de la paille à boire (1) et le canal à liquide (3) est formé le long et essentiellement parallèle à la section de bord (4).

8. Méthode selon les revendications 6 ou 7, **caractérisée en ce que** le matériau pour les pailles à boire (1) est déroulé à partir d'un ou de plusieurs rouleaux de matériau (7), de préférence comme pré-imprimé avec des impressions (5).

9. Méthode selon les revendications 6, 7 ou 8, **caractérisée en ce que**, dans le processus de fabrication, le matériau pour les pailles à boire (1) est déroulé sous forme de bande (8) à partir du rouleau de matériau (7), laquelle bande (8) est formée et fixée à une forme de la paille à boire (1) et la bande formée (8) est coupée à une longueur désirée des pailles à boire (1).

10. Méthode selon l'une des revendications précédentes 6-9, **caractérisé en ce que** la machine de production comprend plusieurs bandes parallèles (8), qui sont déroulées à partir de plusieurs rouleaux de matériau parallèles (7) pour produire parallèlement les pailles à boire (1).

11. Méthode selon l'une quelconque des revendications précédentes 6-10, **caractérisée en ce que** les paille à boire (1) bords coupés à vif sont traités avec un revêtement hydrophobe.
